# EUROPÄISCHE PATENTSCHRIFT

(11) **EP 1 722 146 B1**
(45) Veröffentlichungstag und Bekanntmachung des Hinweises auf die Patenterteilung: **17.10.2007**
(21) Anmeldenummer: 05010044.5
(22) Anmeldetag: 09.05.2005
(51) Int. Cl.: F16L 33/207

(54) **Verbindungsanordnung für Leitungssystem mit Ringelement**
Pipe connection assembly with ring-shaped element
Dispositif de connexion pour tuyaux avec élément annulaire

(43) Veröffentlichungstag der Anmeldung: 15.11.2006
(73) Patentinhaber: Herz Armaturen Ges.m.b.H., 1230 Wien (AT)
(72) Erfinder:
(74) Vertreter: Szynka, Dirk

(56) Entgegenhaltungen:
- EP-A- 1 267 113
- EP-A- 1 326 045
- DE-A1- 2 234 632
- US-B1- 6 450 549

## Beschreibung

Die vorliegende Erfindung betrifft eine Verbindungsanordnung für Rohr- oder Schlauchleitungssysteme.

Solche Verbindungsanordnungen, in der Praxis häufig als Fittinge bezeichnet, sind in verschiedenen Bauformen bekannt, u. a. als sog. Pressfittinge. Bei Pressfittingen wird von einer Presshülse und einer darin angeordneten Stützhülse ein Einschubraum begrenzt, der für das Einschieben eines Rohr- oder Schlauchleitungsendes vorgesehen ist. Das Leitungsende wird dabei auf die Stützhülse aufgeschoben und ist im eingeschobenen Zustand folglich von der Presshülse umgeben. Der Aufschiebvorgang ist durch einen in der Regel aber nicht notwendigerweise an der Stützhülse ausgebildeten Anschlagbund begrenzt. Bei Pressfittingen wird das ein- bzw. aufgeschobene Leitungsende durch ein Verpressen der Presshülse festgelegt, wobei die Presshülse und, insbesondere bei Metallleitungsenden oder Leitungsenden mit Metallanteil, auch das Leitungsende plastisch verformt und auf die Stützhülse aufgepresst werden.

Solche Pressfittinge werden vor allem im Bereich von Gebäudeinstallationen, insbesondere für die Sanitär- und Heizungstechnik, eingesetzt. In der Regel werden Rohrleitungen aus Kunststoff oder Kunststoff/Metall/Kunststoff-Verbundrohre verwendet und dienen Pressfittinge zur dauerhaften Verbindung zwischen Rohrenden und Sanitär oder Heizungsbauteilen oder auch zur Verbindung von Rohrenden untereinander.

Der Verpressvorgang erfolgt üblicherweise mit speziell ausgebildeten Presswerkzeugen, sog. Presszangen, die eine auf das Pressfitting abgestimmte Pressbackengeometrie aufweisen. Die Verpressung erfolgt radial, dabei jedoch über die axiale Länge der Pressbacke oder der Presshülse nicht notwendigerweise homogen. Vielmehr zeigen die Pressbacken ein auf die Verbindungsanordnung und insbesondere auf die Anordnung von Dichtringen darin abgestimmtes Profil.

Für die Herstellung einer ordnungsgemäßen Pressverbindung ist u. a. entscheidend, dass das Leitungsende ausreichend weit in den Einschubraum hineingeschoben worden ist. Es kann allerdings in der Praxis dazu kommen, dass das Leitungsende versehentlich nicht weit genug eingeschoben wird, sei es aus Unachtsamkeit oder weil beispielsweise in Folge von Verschmutzungen ein Widerstand zu spüren ist.

Da solche Fehler zu mangelhaften Pressverbindungen führen können, existieren im Stand der Technik verschiedene Vorschläge für Sichtkontrolleinrichtungen, mit denen sich ein ausreichend weites Einschieben des Leitungsendes in einen solchen Einschubraum optisch verifizieren lässt, bevor der eigentliche Pressvorgang durchgeführt wird. Insbesondere ist es bekannt, in der Presshülse oder in einem die Presshülse relativ zu der Stützhülse haltenden Haltering transparente Bereiche oder Lücken (d. h. Schlitze, Löcher, Ausnehmungen) vorzusehen, durch die hindurch das Rohrende genau dann sichtbar ist, wenn es ausreichend weit eingeschoben ist.

Die EP 1 267 113 B1 wiederum beschreibt eine Verbindungsanordnung in der Form eines Pressfittings mit einem Ringelement in dem Einschubraum, das vor Montage in einem dem Anschlagbund entgegengesetzten Bereich des Einschubraums angeordnet ist und gegen das Eindringen von Verschmutzungen in den Einschubraum schützt. Das Leitungsende schiebt dieses Ringende bei der Vorbereitung der Montage vor sich her bis zu dem Anschlagbund. Dort ist das Ringelement durch radiale Einsicht in den Einschubraum sichtbar, so dass damit mittelbar ein ausreichend weites Einschieben des Leitungsendes kontrolliert werden kann.

Zum Stand der Technik wird ferner verwiesen auf die US 6,450,549 B1, die eine Verbindungsanordnung nach dem Oberbegriff des Anspruchs 1 zeigt.

Der Erfindung liegt das technische Problem zugrunde, eine neue Verbindungsanordnung in Form eines Pressfittings nach dem Oberbegriff des Anspruchs 1 anzugeben, die hinsichtlich der Sichtkontrolle eines ausreichend weiten Einführens des Leitungsendes vor dem Verpressen verbessert ist.

Dieses Problem wird gelöst durch eine Verbindungsanordnung für ein Rohr- oder Schlauchleitungssystem mit einer Stützhülse, auf die ein Leitungsende aufschiebbar ist, einem das Aufschieben begrenzenden Anschlagbund und einer Presshülse, die so angeordnet ist, dass sie mit der Stützhülse einen Einschubraum für das Leitungsende begrenzt, ein auf die Stützhülse aufgeschobenes Leitungsende umgeben kann und das Leitungsende durch ein die Presshülse plastisch verformendes Aufpressen der Presshülse auf das Leitungsende in der Verbindungsanordnung festgelegt werden kann, wobei in dem Einschubraum ein Ringelement angeordnet ist und eine Federeinrichtung vorgesehen ist, gegen deren Federkraft das Ringelement durch das Leitungsende auf den Anschlagbund zu verschoben werden kann, um bei verpresster Presshülse durch das Leitungsende so gehalten zu werden, und die das Ringelement von dem Anschlagbund beabstandet, wenn das Ringelement nicht durch das Leitungsende mit Kraft beaufschlagt ist, wobei ein an den Anschlagbund angenäherter Zustand des Ringelements durch Sichtkontrolle verifizierbar ist, dadurch gekennzeichnet, dass die Sichtkontrolle dadurch ermöglicht ist, dass das Ringelement in dem an den Anschlagbund angenäherten Zustand durch im Wesentlichen radialen Einblick in den Einschubraum sichtbar ist.

Bevorzugte Ausgestaltungen sind in den abhängigen Ansprüchen angegeben und werden im Folgenden näher erläutert. Vorsorglich wird darauf hingewiesen, dass die Offenbarung implizit auch ein Verfahren zum Verbinden eines Leitungsendes mit einem anderen Leitungselement durch Benutzung der dargestellten Verbindungsanordnung betrifft und die folgende Darstellung auch im Hinblick auf entsprechende Verfahrensschritte zu verstehen ist.

Die Grundidee der Erfindung besteht darin, zusätzlich zu dem an sich bereits in der EP 1 267 113 B1 beschriebenen Ringelement, das in dem Einschubraum durch radialen Einblick sichtbar ist, eine Federeinrichtung vorzusehen, die das Ringelement von dem Anschlagbund beabstandet, gegen dessen Federkraft das Ringelement jedoch durch das Leitungsende auf den Anschlagbund zu verschoben werden kann.

Das Ringelement soll dabei durch radialen Einblick in den Einschubraum in zumindest einer dieser beiden Positionen sichtbar sein und damit der Sichtkontrolle dienen. Im Unterschied zu dem zitierten Stand der Technik ist jedoch durch die Federeinrichtung gewährleistet, dass das Ringelement dann, wenn es zwar durch das Leitungsende schon einmal in die maximal an den Anschlagbund angenäherte Position verschoben worden ist, das Leitungsende aber danach noch einmal zurückgeschoben wurde, seine Position wieder ändert. Dies kann beispielsweise geschehen, wenn der Monteur die Verbindungsanordnung oder das Leitungsende nach dem Zusammenschieben wieder loslässt und eine axiale Kraft etwa durch ein Leitungsgewicht an dem Leitungsende oder auch der Verbindungsanordnung zieht.

Im Rahmen der Erfindung ist dabei sowohl denkbar, dass das Ringelement in der durch die Federeinrichtung von dem Anschlagbund beabstandeten Position, jedoch nicht in der maximal an den Anschlagbund angenäherten Position sichtbar ist, als auch der umgekehrte Fall. In beiden Fällen kann man aus der Sichtbarkeit oder Nichtsichtbarkeit des Ringelements klare Schlüsse ziehen. Wenn das Ringelement nur in der durch die Federeinrichtung von dem Anschlagbund beabstandeten Position, jedoch nicht in der maximal an den Anschlagbund angenäherten Position sichtbar ist, wird man im Falle des maximal eingeschobenen Leitungsendes dann das Leitungsende selbst sehen. Dann muss auf eine ausreichend gute Unterscheidbarkeit geachtet werden, etwa durch unterschiedliche farbliche Gestaltung von Ringelement und Leitungsende. Beispielsweise kann eine Signalfarbe des Ringelements, die bei der Sichtkontrolle sichtbar ist, als Fehlerangabe dahingehend zu verstehen sein, dass die Lageposition des Leitungsendes nicht richtig ist.

Im Rahmen der Erfindung ist sogar denkbar, dass das Ringelement in den beiden genannten Positionen sichtbar ist, beispielsweise indem an einem für die Sichtkontrolle vorgesehenen Fenster, einer Öffnung oder dgl. eine Markierung vorgesehen ist, mit der das sichtbare Ringelement in Beziehung gesetzt werden kann. Bevorzugt sind allerdings die beiden vorstehend genannten Varianten, bei denen das Ringelement nur in einer der beiden Positionen zu sehen ist.

Die in dem zitierten Stand der Technik thematisierte Funktion als Schutz gegen das Eindringen von Verschmutzungen in den Einschubraum kann bei einer bevorzugten Ausgestaltung auch im Rahmen der vorliegenden Erfindung gegeben sein. Dazu soll das Ringelement in einem dem Anschlagbund entgegengesetzten Bereich, also im Bereich des Eintritts in den Einschubraum angeordnet sein. Entsprechendes gilt für den ebenfalls in dem zitierten Stand der Technik thematisierten Aspekt eines Schutzes vor galvanischem Kontakt zwischen Metallteilen eines eingeschobenen Leitungsendes und dem Anschlagbund oder der Stützhülse. Auch diese Funktion kann im Rahmen der vorliegenden Erfindung gegeben sein. Zur weiteren Erläuterung wird auf das Ausführungsbeispiel und auf den zitierten Stand der Technik verwiesen.

Es wurde bereits erwähnt, dass die Sichtkontrolle durch im Wesentlichen radialen Einblick in den Einschubraum erfolgt, in dem das Ringelement selbst in zumindest einer der oben diskutierten Positionen zu sehen ist. Dies kann insbesondere durch transparente Bereiche oder Lücken der Presshülse und/oder eines die Presshülse haltenden Halterings erfolgen. Im Fall der Presshülse sind Lücken bevorzugt; der Haltering seinerseits kann insgesamt oder auch nur teilweise transparent ausgeführt sein, im Prinzip aber auch Lücken aufweisen. Wenn ein Haltering vorgesehen ist, der einen dem Anschlagbund benachbarten Bereich des Einschubraums umgibt, ist eine Sichtkontrolle durch den Haltering hindurch bevorzugt. Ein Haltering ist jedoch nicht in jedem Fall notwendig und könnte auch so vorgesehen sein, dass er den Einschubraum nicht oder nicht weit genug umgibt. Dann ist eine Sichtkontrolle durch die Presshülse selbst vorzusehen.

Es ist insbesondere von Vorteil, wenn die in aller Regel aus Metall bestehende Stützhülse von Gewinde- und Sechskantabschnitten u. Ä. abgesehen möglichst rotationssymmetrisch ausgeführt ist und damit weitgehend als Standarddrehteil mit im Übrigen standardisierten Abweichungen, eben Sechskantabschnitten und Schraubgewinden, gefertigt werden kann.

Die Federeinrichtung kann in unterschiedlicher Weise ausgebildet sein, insbesondere als separates Bauteil, als integrierter Bestandteil der Presshülse, des Halterings oder auch der Stützhülse. Bevorzugt ist jedoch, dass die Federeinrichtung mit dem Ringelement selbst gemeinsam ein integriertes einheitliches Bauteil bildet.

Ferner kann die Federeinrichtung unterschiedliche für die Federwirkung geeignete Formen aufweisen, wobei schraublinienförmige Federelemente bevorzugt sind. Wenn die Federeinrichtung dabei mit dem Ringelement integriert ist, kommen insbesondere von einem Ringelement auf im Wesentlichen dessen Radius schraubenlinienförmig abstehende Federelemente oder Federarme in Betracht. Um die Federwirkung gleichmäßig zu verteilen, sind hierbei mindestens zwei, insbesondere drei Federelemente bevorzugt. Die einzelnen schraubenlinienförmigen Federelemente müssen dabei nicht notwendigerweise miteinander überlappen, können also jeweils einen kleineren Bruchteil des Vollkreises ausmachen, im Fall von dreien insbesondere auch einen Winkel von etwas weniger als 120°. Zur Veranschaulichung wird auf das Ausführungsbeispiel verwiesen.

Bevorzugt ist dabei und allgemein, dass eine Verformung der Federeinrichtung nur die Federeinrichtung betrifft und das Ringelement selbst in seiner Ringform unverformt lässt. Die Funktion des Ringelements zur Sichtkontrolle soll also durch Formveränderungen nicht beeinträchtigt werden.

Ferner kann vorgesehen sein, dass das Ringelement in seiner Ringform Ausnehmungen vorsieht, in die die Federeinrichtung im gespannten Zustand, also bei maximal an den Anschlagbund angenäherter Position, aufgenommen werden kann.

Schließlich sieht eine bevorzugte Ausgestaltung einen Sprengring als Ringelement vor, weist also das Ringelement in Umfangsrichtung eine Lücke auf und bildet keinen geschlossenen Ring. Dies kann dazu dienen, dem Ringelement gegenüber der Stützhülse oder, vorzugsweise, der Presshülse eine gewisse Vorspannung zu geben, so dass das Ringelement seine Position in dem Einschubraum oder zumindest in bestimmten Bereichen des Einschubraums nur bei eindeutiger Kraftbeaufschlagung ändert. Insbesondere kann das Ringelement damit in seiner Schutzelementfunktion im Eintrittsbereich des Einschubraums festgelegt sein. Aber auch wenn auf diese Funktion verzichtet wird und das Ringelement von vornherein weiter in den Einschubraum eingeschoben ist, so kann damit verhindert werden, dass das Ringelement versehentlich aus dem Einschubraum herausfällt und verloren geht.

Schließlich sieht eine Ausgestaltung der Erfindung eine ballige Innenfläche des Ringelements vor, also eine radial von innen gesehen konvexe Profilform der Innenfläche. Damit kann das Ringelement unter Vorspannung als Sprengring oder auch ohne Vorspannung besonders gut über die Stützhülse gleiten und insbesondere auch über ggf. dort vorgesehene Dichtungsringe, Rückhalteprofilstrukturen u. Ä. hinwegrutschen.

Die Erfindung wird im Folgenden anhand eines Ausführungsbeispiels näher erläutert. Die dabei offenbarten Einzelmerkmale können auch in anderen Kombinationen erfindungswesentlich sein.

Im Einzelnen zeigt:
- Figur 1: einen axialen Schnitt durch ein erfindungsgemäßes Ringelement mit integrierter Federeinrichtung.
- Figur 2: eine Draufsicht auf das Ringelement aus Figur 1.
- Figur 3: einen axialen Schnitt durch eine erfindungsgemäße Verbindungsanordnung mit dem Ringelement aus den Figuren 1 und 2 aus Ausführungsbeispiel.
- Figur 4: einen axialen Längsschnitt entsprechend Figur 3, jedoch mit eingeführtem Leitungsende.

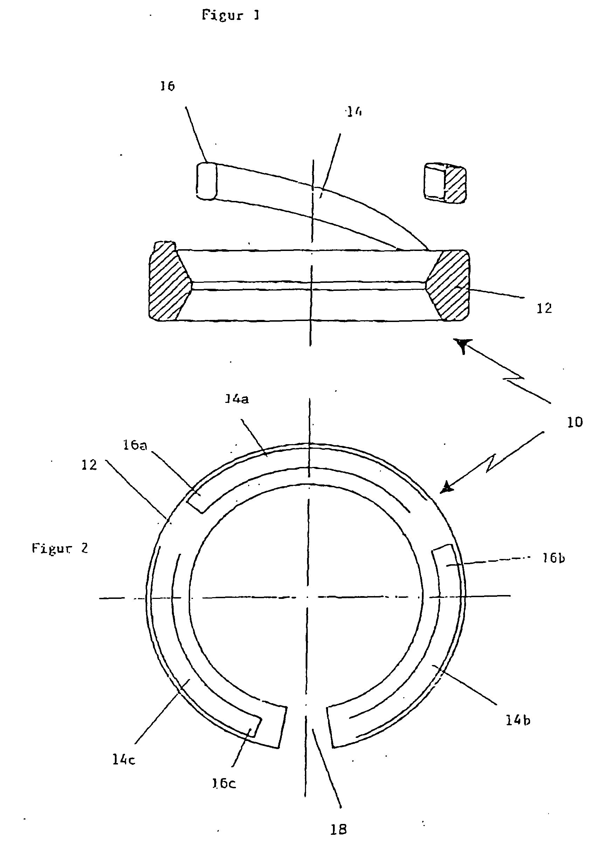

Figur 1 zeigt in axialer Schnittdarstellung ein erfindungsgemäßes Ringelement mit Federeinrichtung, die beide als integriertes Bauteil ausgeführt sind.

Das Ringelement 12 ist ein Kreisring mit einem in Figur 1 dargestellten Schnittprofil. Die Ringachse liegt vertikal.Das Schnittprofil weist nach in axialer Richtung oben und unten und nach radial außen flache Begrenzungsflächen auf, wobei die Ecken dawischen abgerundet sind. Nach radial innen weist das Schnittprofil eine ballige Innenfläche mit zwei zueinander angewinkelten und zu einer radialen Ebene symmetrischen Begrenzungsflächen auf, die abgerundet ineinander übergehen.

Die Federeinrichtung ist in Figur 1 nicht vollständig zu sehen und in Form eines schraubenlinienförmig von dem Ringelement 12 nach axial oben hochstehenden Federarmes 14 mit einem freien Ende 16 gezeigt.

Figur 2 zeigt eine Draufsicht auf dasselbe Ringelement 12. Man erkennt zum einen, dass drei Federarme 14a, 14 b, 14c des in Figur 1 mit 14 bezeichneten Typs vorgesehen sind, die zueinander in Umfangsrichtung um 120° winkelversetzt sind. Die freien Enden 16a, 16b. 16c dieser Federarme 14a, 14 b, 14c können damit in eine stabile Dreipunktauflage auf einem Anschlagbund kommen. Gleichermaßen können die Federarme in einer stabilen Dreipunktverteilung auf dem Ringelement 12 abgestützt sein.

Man erkennt ferner, dass jeder einzelne der Federarme 14a, 14 b, 14c winkelmäßig den zur Verfügung stehenden 120°-Bereich weitgehend ausfüllt, der zur Verfügung stehende Gesamtumfang also weitgehend für die Federeinrichtung genutzt ist.

Schließlich erkennt man, dass das Ringelement 12 ein Sprengring mit einer Dehn- und Stauchfuge 18 ist, so dass sich das Ringelement 12 in Folge seiner Eigenelastizität radial an einen zur Verfügung stehenden Außenradius oder Innenradius eines Einschubraums anpassen kann.

Im Vergleich der Figuren erkennt man ferner, dass Figur 1 von den beiden nicht vollständig gezeigten Federarmen 14 links einen fußpunktnahen Ansatz und rechts ein endpunktnahes Endstück zeigt.

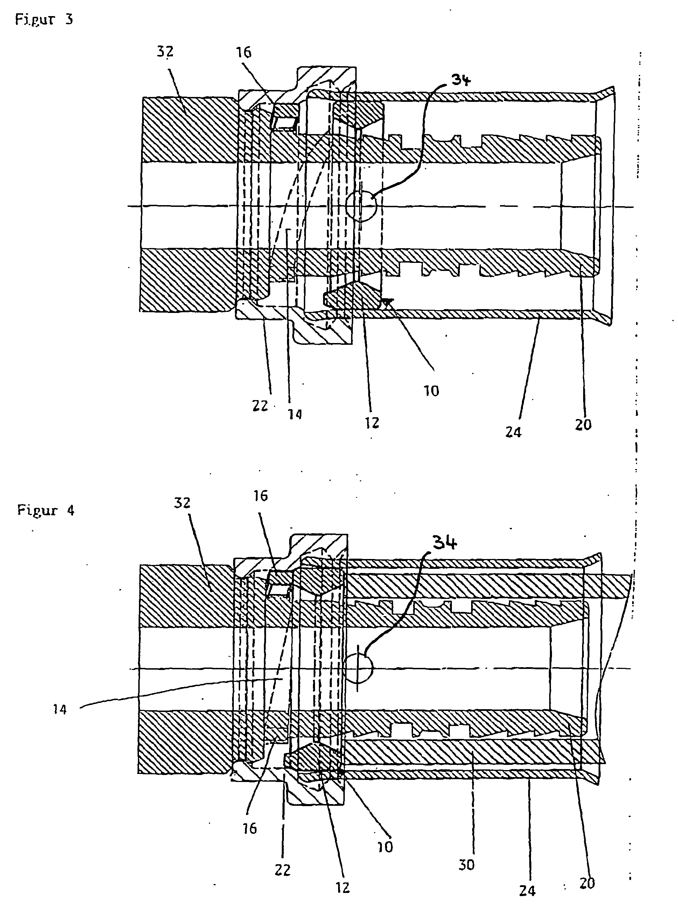

Die Figuren 3 und 4 zeigen eine erfindungsgemäße Verbindungsanordnung, d. h. ein Pressfitting, in axialer Schnittdarstellung. Die Achse liegt horizontal. Eine Metallstützhülse 20 mit einem an sich bekannten radial äußeren Profil für das Aufschieben eines Rohrendes ist in den Figuren 3 und 4 rechts mit einem freien Ende zum Ansetzen des Rohrendes und links mit einem Anschlagbund 32 zur Begrenzung des Aufschieben des Rohrendes versehen. Das Rohrende selbst ist nur in Figur 4 dargestellt und dort mit 30 bezeichnet.

Auf dem Anschlagbund 32 ist auf einer Umfangsnut ein Haltering 22 aus Kunststoff durch axiales Aufschnappen angebracht, wobei eine radial innere Nase des Profils des Halterings 22 in die erwähnte Nut greift. Der Haltering vergrößert sich in Richtung auf das freie Ende der Stützhülse 20 zu radial und umfasst in dem radial vergrößerten Abschnitt einen Teil einer hohlzylinderförmigen Blechpresshülse 24. Deren dem Anschlagbund zugewandtes Ende ist in den radial vergrößerten Abschnitt des Halterings 22 kraftschlüssig eingesteckt und gehalten.

Wesentlich für die Erfindung ist das in den Figuren in den von der Stützhülse 20 und der Presshülse 24 umgrenzten Einführraum eingelegte Ringelement 12 aus den Figuren 1 und 2. Das Ringelement ist im Ausgangszustand des Pressfittings in den in den Figuren rechten Bereich des Einschubraumes eingelegt und dort durch eine gewisse radiale Vorspannung gegen die Presshülse 24 gehalten. Dieser Zustand ist in den Figuren nicht mehr dargestellt. Die entsprechende Funktion zum Schutz vor Schmutz, der in den Einschubraum eindringen könnte und das spätere Einführen des Rohrendes 30 behindern oder zumindest Undichtigkeiten verursachen könnte, ist in dem eingangs zitierten Stand der Technik EP 1 267 113 B1 ausführlich diskutiert, so dass hier verwiesen werden kann.

Figur 3 zeigt zur Verdeutlichung der Bedeutung des Ringelements 12 für die Sichtkontrolle den Zustand, in dem das Ringelement 12 soweit in Richtung Anschlagbund 32 verschoben wurde, dass die in Figur im axialen Schnitt sichtbare Federeinrichtung in Form eines oben links im Einschubraum erkennbaren Schnitts durch einen Federarm 14 im Bereich dessen freien Endes 16 locker an dem Anschlagbund anliegt, jedoch das Ringelement 12 selbst von dem Anschlagbund ein Stück beabstandet. Diese Beabstandung ist hier so ausgelegt, dass das Ringelement 12 noch etwa zur Hälfte im axialen Bereich des Halterings 22 liegt.

Figur'4 zeigt demgegenüber einen Zustand, in dem das dort dargestellte Rohrende 30 das Ringelement 12 soweit nach links auf den Anschlagbund 32 zu verschoben hat, dass der in Figur 3 bereits eingezeichnete Federarm 14 und natürlich die auch nicht eingezeichneten übrigen beiden Federarme entlang ihrer gesamten Länge auf dem Ringelement 12 aufliegen. Dort ist in anderen Worten die Federeinrichtung vollständig zusammengeschoben und damit das Ringelement 12 maximal in Richtung auf den Anschlagbund 32 zu versetzt. Das Ringelement 12 verformt sich dabei selbst nicht

Die Figuren 3 und 4 zeigen ferner etwa in der Mitte ein kreisrundes Loch 34 in der Presshülse.

Es zeigt sich also, dass in dem Zustand gemäß Figur 3 durch das Loch 34 hindurch das Ringelement 12 sichtbar ist und in dem Zustand gemäß Figur 4 stattdessen das Rohrende 30. Wenn beide deutlich unterschiedlich farbig gestaltet sind, lässt sich also aus der Tatsache, dass das Rohrende 30 zu sehen ist, für den Monteur der Rückschluss ableiten, dass die Montage korrekt erfolgt ist oder erfolgen wird, während das Erscheinen eines beispielsweise signalroten Ringelements 12 als Alarmsignal gewertet werden kann.

Man kann sich anhand der Figuren 3 und 4 unmittelbar vorstellen, dass eine axial geringfügig längere Ausbildung des Halterings 22 stattdessen oder auch zusätzlich eine Sichtbarkeit des Ringelements 12 in einem transparenten Haltering 22 in dem Zustand gemäß Figur 4 und Nichtsichtbarkeit in dem Zustand gemäß Figur 3 nach sich ziehen würde. Letzteres wäre, wenn die Presshülse 24 mit einem axial sehr kurzen oder ohne Kunststoffhaltering 22 an dem Anschlagbund 32 montiert wäre, auch mit einer Öffnung in der Presshülse 24 möglich.

Ferner könnte das Ringelement 12 gemäß den Figuren 1 und 3 in dem Querschnittsprofil passende, im Profil rechteckförmige Ausnehmungen zur Aufnahme der Federarme in einem herabgedrückten Zustand aufweisen. Die Ausnehmungen hätten dann also etwa die in Figur 1 erkennbare Profilform der Federarme 14 und etwa die Anordnung auf dem Ringelement 12 in seiner Ringebene, die in Figur 2 als Draufsicht auf die Federarme 14a, 14b, 14c zu sehen ist. Mit dieser Ausführungsform würde der Federarm 16 in Figur 4 quasi im Profil des Ringelements 12 "verschwinden" und damit das Ringelement 12 und das Rohrende 30 um die entsprechende Strecke weiter nachlinks gerückt sein. Damit wäre es ebenfalls durch einen transparenten Haltering 22 hindurch sichtbar.

## Patentansprüche

1. Verbindungsanordnung für ein Rohr- oder Schlauchleitungssystem mit
einer Stützhülse (20), auf die ein Leitungsende (30) aufschiebbar ist,
einem das Aufschieben begrenzenden Anschlagbund (32)
und einer Presshülse (24), die so angeordnet ist, dass sie mit der Stützhülse (20) einen Einschubraum für das Leitungsende (30) begrenzt, ein auf die Stützhülse (20) aufgeschobenes Leitungsende (30) umgeben kann und das Leitungsende (30) durch ein die Presshülse (24) plastisch verformendes Aufpressen der Presshülse (24) auf das Leitungsende (30) in der Verbindungsanordnung festgelegt werden kann,
wobei in dem Einschubraum ein Ringelement (12) angeordnet ist
und eine Federeinrichtung (14, 16) vorgesehen ist,
gegen deren Federkraft das Ringelement (12) durch das Leitungsende (30) auf den Anschlagbund (32) zu verschoben werden kann, um bei verpresster Presshülse (24) durch das Leitungsende (30) so gehalten zu werden,
und die das Ringelement (12) von dem Anschlagbund (32) beabstandet, wenn das Ringelement (12) nicht durch das Leitungsende (30) mit Kraft beaufschlagt ist,
wobei ein an den Anschlagbund (32) angenäherter Zustand des Ringelements (12) durch Sichtkontrolle verifizierbar ist,
**dadurch gekennzeichnet, dass** die Sichtkontrolle **dadurch** ermöglicht ist, dass das Ringelement (12) in dem an den Anschlagbund (32) angenäherten Zustand durch im Wesentlichen radialen Einblick in den Einschubraum sichtbar ist.

2. Verbindungsanordnung nach Anspruch 1, bei der das Ringelement (12) in einem dem Anschlagbund (32) entgegengesetzten Bereich des Einschubraums angeordnet ist und dort zum Schutz gegen das Eindringen von Verschmutzungen in den Einschubraum dient.

3. Verbindungsanordnung nach Anspruch 1 oder 2, bei der das Ringelement (12) in dem Einschubraum durch den im Wesentlichen radialen Einblick nur dann sichtbar ist, wenn es durch das Leitungsende (30) gegen die Federkraft auf den Anschlagbund (32) zu verschoben ist.

4. Verbindungsanordnung nach Anspruch 1 oder 2, bei der das Ringelement (12) in dem Einschubraum durch den im Wesentlichen radialen Einblick nur dann sichtbar ist, wenn es durch die Federeinrichtung (14, 16) von dem Anschlagbund (32) beabstandet ist.

5. Verbindungsanordnung nach einem der vorstehenden Ansprüche mit einem die Presshülse (24) relativ zu der Stützhülse (20) haltenden Haltering (22), der transparente Bereiche oder Lücken für den im Wesentlichen radialen Einblick in den Einschubraum aufweist.

6. Verbindungsanordnung nach einem der vorstehenden Ansprüche, bei der die Presshülse (24) Lücken oder transparente Bereiche für den im Wesentlichen radialen Einblick in den Einschubraum aufweist.

7. Verbindungsanordnung nach einem der vorstehenden Ansprüche, bei der das Ringelement (12) und die Federeinrichtung (14, 16) ein integriertes Bauteil bilden.

8. Verbindungsanordnung nach einem der vorstehenden Ansprüche, bei der die Federeinrichtung schraubenlinienförmige Federelemente (14, 16) aufweist.

9. Verbindungsanordnung nach Anspruch 7 und 8, bei der von dem Ringelement (12) drei zueinander in Umfangsrichtung versetzte schraubenlinienförmige Federelemente (14, 16) abstehen.

10. Verbindungsanordnung nach einem der vorstehenden Ansprüche, bei der eine Verformung der Federeinrichtung (14, 16) das Ringelement (12) selbst unverformt lässt.

11. Verbindungsanordnung nach einem der vorstehenden Ansprüche, bei der die Federeinrichtung im gespannten Zustand in einer Ringform des Ringelements aufgenommen werden kann.

12. Verbindungsanordnung nach einem der vorstehenden Ansprüche, bei der das Ringelement (12) ein Sprengring ist.

13. Verbindungsanordnung nach einem der vorstehenden Ansprüche, bei der das Ringelement (12) eine ballige Innenfläche aufweist.

14. Ringelement (12) einer Verbindungsanordnung nach einem der vorstehenden Ansprüche integriert mit einer Federeinrichtung (14, 16), die in Form zumindest eines schraubenlinienförmigen Federelements (14, 16) von dem Ringelement (12) absteht.

## Claims

1. A connection arrangement for a tube piping or a flexible tube piping, comprising
a support sleeve (20) onto which a pipe end (30) can be slid,
a stop shoulder (32) delimiting said sliding,
and a press sleeve (24) which is arranged such that it delimits an insertion space for said pipe end (30) with said support sleeve (20), that it can surround a pipe end (30) slid onto said support sleeve (20) and that said pipe end (30) can be fixed within said connection arrangement by a pressing of said press sleeve (24) onto said pipe end (30) such that said press sleeve (24) is plastically deformed,
wherein a ring element (12) is arranged in said insertion space
and spring means (14, 16) are provided therein,
against the spring pressure of which said ring element (12) can be slid by said pipe end (30) towards said stop shoulder (32) to be held thereby by said pipe end (30) with said press sleeve (24) having been pressed,
and which spaces said ring element (12) from said stop shoulder (32) if said pipe end (30) does not urge said ring element (12),
wherein a state of said ring element (12) having approached said stop shoulder (32) can be verified by visual inspection,
**characterized in that** said visual inspection is enabled by said ring element (12) being visible in said state having approached said stop shoulder (32) by substantially radial sight into said insertion space.

2. The connection arrangement according to claim 1, in which said ring element (12) is arranged in a portion of said insertion space opposing said stop shoulder (32) and in which said ring element (12) serves there as a protection against the penetration of contamination into said insertion space.

3. The connection arrangement according to claim 1 or 2, in which said ring element (12) within said insertion space is only visible by said substantially radial sight if it is slid onto said stop shoulder (32) by said pipe end (30) against said spring pressure.

4. The connection arrangement according to claim 1 or 2, in which said ring element (12) within said insertion space is only visible by said substantially radial sight, if it is spaced from said stop shoulder (32) by said spring means (14, 16).

5. The connection arrangement according to one of the preceding claims, comprising a holding ring (22) holding said press sleeve (24) relative to said support sleeve (20), which holding ring (22) comprises transparent sections or gaps for said substantially radial sight into said insertion space.

6. The connection arrangement according to one of the preceding claims, in which said press sleeve (24) comprises gaps or transparent sections for said substantially radial sight into said insertion space.

7. The connection arrangement according to one of the preceding claims, in which said ring element (12) and said spring means (14, 16) constitute an integrated part.

8. The connection element according to one of the preceding claims, in which said spring means comprise helically curved spring elements (14, 16).

9. The connection arrangement according to claim 7 and 8, in which three helically curved spring elements (14, 16) project from said ring element (12) mutually offset circumferentially.

10. The connection arrangement according to one of the preceding claims, in which a deformation of said spring means (14, 16) leaves said ring element (12) itself undeformed.

11. The connection arrangement according to one of the preceding claims, in which said spring means can be received in a ring shape of said ring element in a tense state.

12. The connection arrangement according to one of the preceding claims, in which said ring element (12) is a snap ring.

13. The connection arrangement according to one of the preceding claims, in which said ring element (12) comprises a crowned inner surface.

14. A ring element (12) of a connection arrangement according to one of the preceding claims, integrated with spring means (14, 16) projecting from said ring element (12) in a form of at least one helical spring element (14, 16).

## Revendications

1. Agencement de raccordement pour un système de conduits par tubes ou par flexibles avec un manchon d'appui. (20), sur lequel peut s'emboîter une extrémité de conduit (30), avec un collet de butée (32) délimitant l'emboîtement et avec un manchon à sertir (24) qui est disposé de sorte à délimiter avec le manchon d'appui (20) un espace d'insertion pour l'extrémité de conduit (30), de sorte à être susceptible d'entourer une extrémité de conduit (30) emboîtée sur le manchon d'appui (20) et à permettre de fixer l'extrémité de conduit (30) dans l'agencement de raccordement, par un emmanchement du manchon à sertir (24), par pression à déformation plastique du manchon à sertir (24) sur l'extrémité de conduit (30),
un élément annulaire (12) étant disposé dans l'espace d' insertion
et un dispositif à ressorts (14, 16) étant prévu,
contre la force de ressort duquel l'élément annulaire (12) peut être déplacé par l'extrémité de conduit (30) vers le collet de butée (32), pour être maintenu de cette façon par l'extrémité de conduit (30), lorsque le manchon à sertir (24) est compressé,
et qui écarte l'élément annulaire (12) du collet de butée (32), lorsque l'élément annulaire (12), n'est pas soumis à une force par l'extrémité de conduit (30),
une position de l'élément annulaire (12) rapprochée du collet de butée (32) étant vérifiable par contrôle visuel,
**caractérisé en ce que** le contrôle visuel est rendu possible **en ce que**, en position rapprochée du collet de butée (32) l'élément annulaire (12) est visible par coup d'oeil sensiblement radial dans l'espace d'insertion.

2. Agencement de raccordement selon la revendication 1, dans lequel l'élément annulaire (12) est disposé dans une zone de l'espace d'insertion qui est opposée au collet de butée (32) et y sert de protection contre la pénétration de saletés dans l'espace d'insertion.

3. Agencement de raccordement selon la revendication 1 ou 2, dans lequel l'élément annulaire (12) est visible dans l'espace d'insertion par coup d'oeil sensiblement radial, seulement lorsqu'il est déplacé par l'extrémité de conduit (30) contre la force du ressort vers le collet de butée (32).

4. Agencement de raccordement selon la revendication 1 ou 2, dans lequel l'élément annulaire (12) est visible dans l'espace d'insertion par coup d'oeil sensiblement radial, seulement lorsqu'il est écarté du collet de butée (32) par le dispositif à ressorts (14, 16).

5. Agencement de raccordement selon l'une quelconque des revendications précédentes, avec une bague de retenue (22) maintenant le manchon à sertir (24) par rapport au manchon d'appui (20), qui comporte des zones transparentes ou des interstices pour le coup d'oeil sensiblement radial dans l'espace d'insertion.

6. Agencement de raccordement selon l'une quelconque des revendications précédentes, dans lequel le manchon à sertir (24) comporte des interstices ou des zones transparentes pour le coup d' oeil sensiblement radial dans l'espace d'insertion.

7. Agencement de raccordement selon l'une quelconque des revendications précédentes, dans lequel l'élément annulaire (12) et le dispositif à ressorts (14, 16) forment un élément intégré.

8. Agencement de raccordement selon l'une quelconque des revendications précédentes, dans lequel le dispositif à ressorts comporte des éléments à ressorts (14, 16) de forme hélicoïdale.

9. Agencement de raccordement selon la revendication 7 et 8, dans lequel trois éléments à ressort (14, 16) hélicoïdaux mutuellement déportés en direction périphérique dépassent de l'élément annulaire (12).

10. Agencement de raccordement selon l'une quelconque des revendications précédentes, dans lequel une déformation du dispositif à ressorts (14, 16) n'a pas pour effet de déformer l'élément annulaire (12) lui-même.

11. Agencement de raccordement selon l'une quelconque des revendications précédentes, dans lequel, en position tendue le dispositif à ressorts est susceptible de se loger dans un moulage annulaire de l'élément annulaire.

12. Agencement de raccordement selon l'une quelconque des revendications précédentes, dans lequel l'élément annulaire (12) est un circlips.

13. Agencement de raccordement selon l'une quelconque des revendications précédentes, dans lequel l'élément annulaire (12) comporte une surface intérieure bombée.

14. Elément annulaire d'un agencement de raccordement selon l'une quelconque des revendications précédentes, intégré avec un dispositif à ressorts (14, 16), qui sous forme d'au moins un élément à ressort hélicoïdal (14, 16), dépasse de l'élément annulaire (12).
